# EUROPEAN PATENT APPLICATION

(11) **EP 1 473 261 A1**
(43) Date of publication of application: **03.11.2004**
(21) Application number: 04101779.9
(22) Date of filing: 28.04.2004
(51) Int. Cl.: B65G 49/06

(54) **Assembly for testing portions of glass sheets of any size, and sheet processing unit equipped with such an assembly**

(30) Priority: 29.04.2003 IT TO20030323
(71) Applicant: BOTTERO S.p.A., 12010 Cuneo (IT)
(72) Inventor: Ghinamo, Paolo, 12012 Boves (IT)
(74) Representative: Jorio, Paolo, Dr. Ing.

(57) **Abstract**

An assembly for storing portions of glass sheets has a store having a number of substantially vertical compartments, a supporting surface for supporting the portions in a substantially horizontal position, and a gripping and conveying device for moving the portions to and from the supporting surface and the compartments; the gripping and conveying device having a rotating device rotating about a horizontal axis, and a slide also rotating about the horizontal axis to receive the portions from the rotating device, and which moves parallel to the horizontal axis to and from the compartmented store. The gripping and conveying means is able to transfer simultaneously a number of portions of different shapes and sizes to and from said supporting surface.

## Description

The present invention relates to an assembly for storing glass sheets or portions of glass sheets of any size.

As is known, glass sheets are cut by placing the sheet on a cutting table, cutting the sheet according to a given program, and transferring the sheet to a break-off station where it is broken up along the cutting lines into a number of finished or semifinished parts, and a number of leftover or scrap portions of equal or different sizes.

Dealing with the leftover portions of the sheet is a complex job, particularly in the case of large production lots, on account of the large number of portions involved, which may differ widely in shape and size, and are often still large enough to be used for producing finished or semifinished parts of later lots.

It is an object of the present invention to provide an assembly for storing glass sheets of any size, which provides a straightforward, low-cost solution to the above problem, and which, in particular, provides for storing sheet portions of any size and/or shape.

According to the present invention, there is provided an assembly for storing portions of glass sheets, the assembly comprising a store having a number of substantially vertical compartments; a supporting surface for supporting said portions in a substantially horizontal position; and gripping and conveying means for moving the portions to and from said supporting surface, and for inserting and extracting them into and from respective said compartments.

A non-limiting embodiment of the invention will be described by way of example with reference to the accompanying drawings, in which:
Figure 1 shows a schematic view in perspective of a preferred embodiment of a glass sheet processing unit featuring a sheet portion storage assembly in accordance with the teachings of the present invention;
Figure 2 shows a larger-scale view in perspective of a detail in Figure 1.

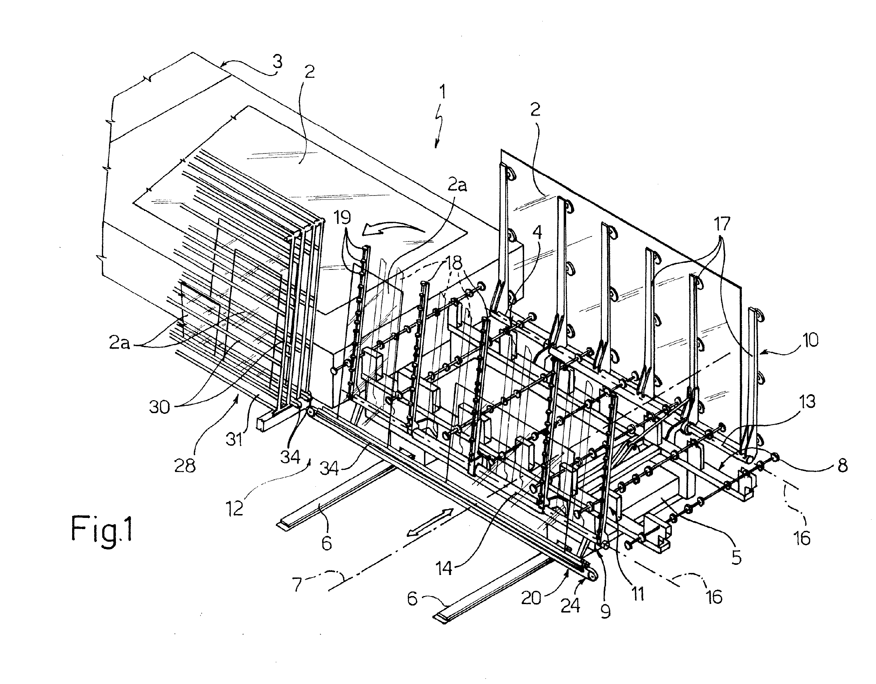

Number 1 in Figure 1 indicates as a whole a unit for processing glass sheets 2.

Unit 1 comprises a known cutting and break-off table 3, not described in detail, for cutting up sheets 2; and a known horizontal supporting and transfer surface 4, which has rows of idle wheels, is located adjacent to table 3, and is supported on a powered structure 5 fitted to two straight guides 6 on the floor to travel back and forth in a direction 7.

The opposite sides 8 and 9 of structure 5 in direction 7 are fitted with respective rotating devices 10 and 11 for loading and unloading the sheets, and each of which comprises an elongated connecting portion 13, 14 perpendicular to direction 7 and hinged to relative side 8, 9 to rotate about a respective axis 16 perpendicular to direction 7.

Each elongated portion 13, 14 is fitted integrally with a number of arms 17, 18 perpendicular to relative axis 16; arms 17 are fitted with respective suction cups; and each arm 18 (only some of which are shown in Figure 1) is fitted with a row of side by side wheels 19 rotating idly about a common axis parallel to the relative arm and perpendicular to respective axis 16.

With reference to Figure 1, together with supporting surface 4, device 11 forms part of a storage assembly 12 also comprising a transfer conveyor 20, a frame 21 of which is fitted integrally to connecting portion 9, below connecting portion 9 and on the opposite side of axis 16 to arms 18, so as to rotate together with arms 18.

Frame 21 is fitted with two wheels 22, one of which is powered, rotating about respective axes 23 parallel to direction 7. A toothed belt 24 is looped about wheels 22, and has a top forward branch 25 running on a straight guide 26 of frame 21 parallel to axis 16.

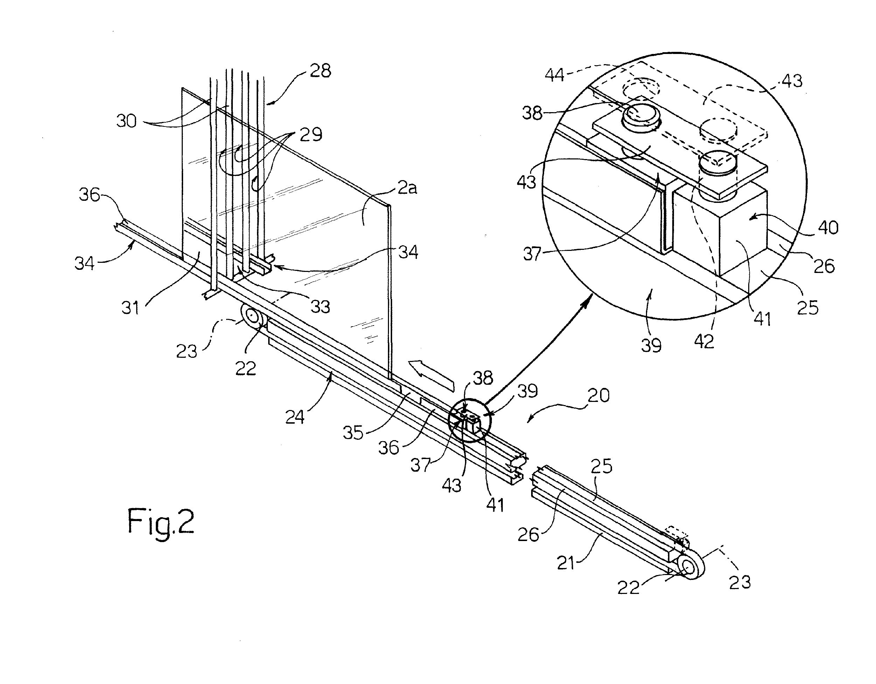

Straight guide 26 and forward branch 25 extend in line with a store 28, which forms part of unit, is adjacent to table 3, and comprises a number of vertical compartments 29, each extending parallel to axis 16 (Figure 2). Each compartment 29 is defined laterally by facing and/or adjacent elongated supporting members 30, and at the bottom by a bottom wall 31 defining, together with bottom portions of elongated members 30, a straight guide 33 parallel to straight guide 26. A respective slide runs in contact with each guide 33, and is defined, in the example shown, by an upwardly concave channel 34, in turn defined by a flat bottom wall 35 of substantially the same width as belt 24 and resting on the forward branch of the belt, and by two facing lateral walls 36 cooperating in sliding manner with guides 26 and 33.

Each channel 34 terminates with a connecting portion 37, from which a lock pin 38 projects upwards. Pin 38 forms part of a releasable lock assembly 39 also comprising a linear actuator 40, which has a casing 41 fitted integrally to one end of forward branch 25, and an output member 42 movable vertically to and from forward branch 25 and terminating with a projecting plate 43 having a hole 44 engaged in sliding manner by pin 38.

Operation of unit 1 will now be described, as of the condition in which a sheet 2 rests on cutting and break-off table 3; rotating device 11 is in a lowered receiving position with arms 18 turned down onto supporting surface 4; and one of channels 34, connected to branch 25 by assembly 39, is withdrawn from respective compartment 29 and in a withdrawn receiving position on forward branch 25 of conveyor 20, as shown in Figure 1.

As of this condition, sheet 2 is cut and broken up on table 3 into a number of finished or semifinished products, which are removed from table 3 in known manner, and a number of leftover sheet portions 2a and scrap. At this point, the scrap is removed and fed into a bin, while reusable sheet portions 2a are fed onto supporting and transfer surface 4. As soon as one or more portions are fed onto supporting and transfer surface 4, rotating device 11 is activated to rotate arms 18, anticlockwise in Figure 1, into a raised position parallel to compartments 29, as shown in Figure 1. As arms 18 rotate, sheet portions 2a resting on wheels 19 roll gradually by force of gravity into channel 34, which supports them side by side and in fixed positions contacting wheels 19. As soon as arms 18 are in the raised position, structure 5 is moved to align channel 34 containing the sheet portions with relative compartment 29; at which point, conveyor 20 is activated, and belt 24 moves channel 34 gradually towards store 28. As it is fed towards the store, channel 34 gradually disengages guide 26 and engages guide 33, and continues moving forward until it is housed inside compartment 29. At this point, the sheet portions are housed completely inside compartment 29 and supported by elongated members 30 defining compartment 29, so actuator 40 is operated to lift plate 43 and release pin 38.

When portions 2a inside one of compartments 29 can be reused to make particular products, structure 5 is again moved in direction 7, the conveyor is aligned with the compartment containing the reusable portions, and the channel is withdrawn together with the respective reusable portions by performing, in reverse, the same steps described above to insert the channel. The sheet portions are thus fed back onto supporting surface 4, and from this onto table 3.

As will be clear from the foregoing description, the design of rotating device 11 and location of store 28 alongside cutting and break-off table 3 provide a straightforward overall solution to the problems of transporting and storing sheet portions 2a of any size.

This is mainly due to portions 2a being simply fed off table 3 onto supporting surface 4, and dropping by force of gravity into one of channels 34, and to the sheet portions being inserted and withdrawn inside the relative channel at all times, thus preventing jamming or relative movement of the sheet portions, and also enabling simultaneous transfer of a number of sheet portions, thus reducing transfer time.

Transfer time and the compactness of the sheet processing unit as a whole are further improved by the particular arrangement of table 3, surface 4 and store 28.

Clearly, changes may be made to unit 1 as described herein without, however, departing from the scope of the present invention. In particular, conveyor 20 may be replaced by a linear actuator, e.g. a linear motor, or by a different guide-slide assembly, e.g. a rack and pinion type.

The channels may also be connected to the conveyor, or to an equivalent linear conveying means, by lock assemblies other than assembly 39.

## Claims

1. An assembly for storing portions of glass sheets of any size, the assembly comprising a store having a number of substantially vertical compartments; a supporting surface for supporting said portions in a substantially horizontal position; and gripping and conveying means for moving the portions to and from said supporting surface, and for inserting and extracting them into and from respective said compartments.

2. An assembly as claimed in Claim 1, **characterized in that** said gripping and conveying means simultaneously transfer a number of portions of different shapes and sizes to and from said supporting surface.

3. An assembly as claimed in Claim 2, **characterized in that** said gripping and conveying means comprise an elongated movable bottom supporting and retaining seat for supporting and retaining a bottom peripheral portion of each portion.

4. An assembly as claimed in Claim 2, **characterized in that** said gripping and conveying means comprise, for each said compartment, a slide defining said supporting and retaining seat; said portions extending upwards from said slide; and said gripping and conveying means also comprising actuating means for moving each said slide between a portion receiving/release position, and a portion supporting position inside a relative said compartment.

5. An assembly as claimed in Claim 4, **characterized in that** said actuating means comprise releasable connecting means for selectively engaging said slides.

6. An assembly as claimed in Claim 5, **characterized in that** said releasable connecting means comprise a retaining seat carried by one of said slide and said actuating means; and a lock member carried by the other of said slide and said actuating means and engaging said retaining seat.

7. An assembly as claimed in Claim 5 or 6, **characterized in that** said actuating means comprise a linear actuator.

8. An assembly as claimed in Claim 5 or 6,
**characterized in that** said actuating means comprise an endless belt having a straight forward branch fitted integrally with said releasable connecting means.

9. An assembly as claimed in Claim 8, **characterized in that** said slide is superimposed on said forward branch to move, in contact with the forward branch, between said receiving/release position and said supporting position.

10. An assembly as claimed in one of Claims 2 to 9, **characterized in that** said gripping and conveying means also comprise rotating means rotating about a horizontal axis between said supporting surface and a substantially vertical position; said supporting and retaining seat extending parallel to said axis, rotating about said axis together with said rotating means to receive said portions from said rotating means, and being movable in a direction parallel to said axis.

11. An assembly as claimed in Claim 10, **characterized in that** said rotating means and said supporting and retaining seat are located on opposite sides of said axis.

12. A unit for processing sheets of glass, comprising a dividing assembly for dividing a large sheet into a number of sheet portions, and a storage assembly for storing said sheet portions; the storage assembly comprising a store having a number of substantially vertical compartments, a supporting surface for supporting said sheet portions in a substantially horizontal position, and gripping and conveying means for moving said sheet portions to and from said supporting surface, and for inserting and extracting them into and from respective said compartments; said store being located alongside said dividing assembly and aligned with said gripping and conveying means.

13. A unit as claimed in Claim 12, **characterized in that** said gripping and conveying means comprise a slide movable between said store and said supporting surface, and for supporting said sheet portions in a substantially vertical position; and rotating means for feeding said sheet portions onto said slide.

14. A unit as claimed in Claim 13, **characterized in that** said slide rotates about an axis of rotation of said rotating means to receive said sheet portions as said rotating means are raised, and runs parallel to said axis to and from said store.
